# EUROPEAN PATENT APPLICATION

(11) **EP 4 717 797 A2**
(43) Date of publication of application: **01.04.2026**
(21) Application number: 25203371.7
(22) Date of filing: 19.09.2025
(51) Int. Cl.: C25B 1/04, C25B 15/023

(54) **SYSTEM AND METHOD TO CONTROL HYDROGEN-TO-OXYGEN RATIO IN AN ANODE SIDE AT TURNDOWN IN ELECTROLYZERS**

(30) Priority: 27.09.2024 US 202463700257 P
(71) Applicant: New Hydrogen IP, LLC, Columbus, Indiana 47201 (US)
(72) Inventor: HUSSAINI, Irfan Saif, Glenville, 12302 (US); JOOS, Nathaniel Ian, Toronto, MP 1N7 (CA); PRABHAKARAN, Rama Aravind, Malta, 12020 (US); TIAN, Jiashen, Malta, 12020 (US); DAVID P., Genter, Columbus, 47201 (US); ZHANG, Yuetao, Rexford, 12148 (US); ROMINIYI, Olawale, Mississauga, L5M 7T8 (CA); St-PIERRE, Jean, Indianapolis, 46237 (US)
(74) Representative: Marks & Clerk Cummins

(57) **Abstract**

An electrolysis system includes an electrolyzer stack having an anode side that provides an anode-side gas having a hydrogen-to-oxygen (HTO) ratio, an oxygen separator tank fluidically coupled the anode side, and an anode-side dilution system that is changeable between a closed-monitor state and an open-dilution state.

## Description

### CROSS-REFERENCE TO RELATED APPLICATIONS

The nonprovisional applications claims the benefit and priority, under 35 U.S.C. § 119(e) and any other applicable laws or statutes, to U.S. Provisional Patent Application Serial No. 63/700,257 filed on September 27, 2024, the entire disclosure of which is hereby expressly incorporated herein by reference.

### TECHNICAL FIELD

The present disclosure relates to an anode-side dilution system for use in an electrolysis system and methods of using the anode-side dilution system.

### BACKGROUND

When a typical electrolysis system is operating, crossover hydrogen is drawn across the membrane of the electrolyzer stack from the cathode side to the anode side. When the electrolysis system operates at high current densities, most of this crossover hydrogen reacts with the oxygen on the anode side with the assistance of a gas recombination catalyst (GRC) in the membrane and/or catalyst layer. However, some of the crossover hydrogen slips through the membrane and mixes with the oxygen gas on the anode side of the electrolyzer stack. The amount of crossover hydrogen present with the oxygen gas on the anode side is measured by a hydrogen-to-oxygen ratio (HTO). For safety reasons, the HTO ratio on the anode side must be below a certain threshold. For example, some government regulations require the HTO ratio to be below 2%.

When the electrolysis system operates at low current densities, the amount of oxygen generated by the anode side is lower than when the electrolysis system operates at high current densities. This results in the HTO ratio being greater at low current densities than the HTO ratio at high current densities. When the HTO ratio is at or above the certain threshold, the electrolysis system may be forced to shut down or may prohibit operation of the electrolysis system at low current densities. Moreover, efficiency of the GRC depletes over time, which also increases the likelihood of the HTO ratio being at or above the certain threshold.

The present disclosure is directed to an anode-side dilution for use in an electrolysis system and methods of using the anode-side dilution system to minimize, eliminate, and/or prevent the need to shut down the electrolysis system for HTO reasons, among other things.

### SUMMARY

Embodiments of the present disclosure are included to meet these and other needs.

In one aspect described herein, an electrolysis system includes an electrolyzer stack, an oxygen separator tank, and an anode-side dilution system. The electrolyzer stack has an anode side that provides an anode-side gas having a hydrogen-to-oxygen (HTO) ratio. The oxygen separator tank is fluidically coupled to an outlet of the anode side with an oxygen conduit. The anode-side dilution system transitions between a closed-monitor state and an open-dilution state.

The anode-side dilution system includes a diluent gas tank, an HTO sensor, and a valve. The diluent gas tank stores a diluent gas and is fluidically coupled to the outlet of the anode side with a diluent-delivery conduit between the diluent gas tank and the oxygen conduit. The HTO sensor measures the HTO ratio of the anode-side gas downstream of the oxygen separator tank. The valve is coupled to the diluent-delivery conduit to selectively change the anode-side dilution system between the closed-monitor state and the open-dilution state.

In some embodiments, the valve may be in a closed configuration when the anode-side dilution system is in the closed-monitor state. In some embodiments, the valve may be in an open configuration when the anode-side dilution system is in the open-dilution state to direct the diluent gas to the anode side to mix and/or blend with the anode-side gas to provide a combined gas having a HTO ratio.

In some embodiments, the valve may change from a closed configuration to an open configuration to change the anode-side dilution system from the closed-monitor state to the open-dilution state to direct the diluent gas to the anode side to mix and/or blend with the anode-side gas to provide a combined gas having a HTO ratio. In some embodiments, the anode-side dilution system may further include a controller having a processor and a memory storing instructions to, when executed by the processor, change the valve from the closed configuration to the open configuration and/or keep the valve in the open configuration when the HTO ratio measured by the HTO sensor is at or above a predetermined ratio. In some embodiments, the anode-side dilution system may further include a controller having a processor and a memory storing instructions to, when executed by the processor, keep the valve in the closed configuration and/or change the valve from the open configuration to the closed configuration when the HTO ratio measured by the HTO sensor is below a predetermined ratio.

In some embodiments, the diluent gas may include ambient air, nitrogen gas, oxygen gas, and/or carbon dioxide gas. In some embodiments, the anode-side dilution system may further include a second diluent delivery conduit that fluidically couples the diluent gas tank to an inlet of the anode side.

According to a second aspect, described herein, a method for reducing a hydrogen-to-oxygen (HTO) ratio of a gas provided by an electrolyzer stack includes operating an electrolyzer stack. The electrolyzer stack has an anode side that provides an anode-side gas having a hydrogen-to-oxygen (HTO) ratio. The method further includes measuring the HTO ratio of the anode-side gas with a HTO sensor located downstream of an outlet of the anode side. The method also includes when the HTO ratio of the anode-side gas measured by the HTO sensor is below a predetermined threshold, operating an anode-side dilution system coupled to the electrolyzer stack in a closed-monitor state. The method also includes when the HTO ratio of the anode-side gas measured by the HTO sensor is at or above the predetermined threshold, operating the anode-side dilution system in an open-dilution state.

In some embodiments, operating the anode-side dilution system in the open dilution state may include directing a diluent gas to the anode side to mix and/or blend with the anode-side gas. In some embodiments, operating the anode-side dilution system may further include measuring the HTO ratio of a combined gas of the diluent gas and the anode-side gas with the HTO sensor. In some embodiments, if the HTO ratio of the combined gas measured by the HTO sensor is at or above the predetermined threshold, the method may include operating the anode-side dilution system in the open-dilution state. In some embodiments, if the HTO ratio of the combined gas measured by the HTO sensor is below the predetermined threshold, the method may include operating the anode-dilution system in the closed-monitor state.

In some embodiments, directing the diluent gas to the anode side may include directing the diluent gas through an outlet of the anode side.

According to a third aspect, described herein, an electrolysis system includes at least two electrolyzer stacks, an oxygen separator tank, and an anode-side dilution system. Each of the at least two electrolyzer stacks have an anode side that provides an anode-side gas having a hydrogen-to-oxygen (HTO) ratio. The oxygen separator tank is fluidically coupled to an outlet of each of the anode sides with a respective oxygen conduit. The anode-side dilution system transitions between a closed-monitor state and an open-dilution state.

The anode-side dilution system includes a diluent gas tank, a primary HTO sensor, and a respective valve. The diluent gas tank stores a diluent gas and fluidically couples to the outlet of each anode side with a respective diluent-delivery conduit between the diluent gas tank and the respective oxygen conduit. The primary HTO sensor measures the HTO ratio of the anode-side gas from the at least two electrolyzer stacks downstream of the oxygen separator tank. The respective valve is coupled to each of the diluent-delivery conduits to selectively change the anode-side dilution system between the closed-monitor state and the open-dilution state.

In some embodiments, the respective valve may be in an open configuration when the anode-side dilution system is in the open-dilution state to direct the diluent gas to an outlet of each anode side to mix and/or blend with the anode-side gas in each anode side to provide a combined gas from the at least two electrolyzer stacks having a HTO ratio.

In some embodiments, the anode-side dilution system may further include a controller having a processor and a memory storing instructions to, when executed by the processor, change the respective valve from a closed configuration to an open configuration when the HTO ratio measured by the primary HTO sensor is at or above a predetermined ratio. In some embodiments, the anode-side dilution system may further includes first secondary HTO sensor coupled to a respective oxygen conduit to measure the HTO ratio of the anode-side gas from a respective electrolyzer stack of the at least two electrolyzer stacks and a second secondary HTO sensor coupled to another respective oxygen conduit to measure the HTO ratio of the anode-side gas from another respective electrolyzer stack of the at least two electrolyzer stacks. In some embodiments, the respective valve associated with the first secondary HTO sensor may change to the open configuration when HTO ratio of the anode-side gas of the respective electrolyzer stack of the at least two electrolyzer stacks is at or above the predetermined threshold. In some embodiments, the respective valve associated with the first secondary HTO sensor may change to the open configuration and the respective valve associated with the second secondary HTO may stay in the closed configuration to change the anode-side dilution system to a partial open-dilution state.

### BRIEF DESCRIPTION OF THE DRAWINGS

FIG. 1A is perspective view of an electrolyzer stack according to the present disclosure;
FIG. 1B is a schematic view of an electrolysis system configured to utilize the electrolyzer stack of FIG. 1A;
FIG. 1C is a schematic view of an additional portion of the electrolysis system of FIG. 1B;
FIG. 2 is a schematic view of an electrolysis system having an electrolyzer stack and an anode-side dilution system fluidically coupled to the electrolyzer stack to selectively dilute a gas exiting an outlet of the electrolyzer stack;
FIG. 3A is a schematic view of the electrolyzer stack of FIG. 2 showing that the electrolyzer stack includes an anode side, a membrane, and a cathode side and further showing the anode-side dilution system in a closed-monitor state where an anode-side gas exits an outlet of the anode side;
FIG. 3B is a schematic view of the electrolyzer of FIG. 2 showing the anode-side dilution system in an open-dilution state where the anode-side dilution system delivers a diluent gas to the anode side of the electrolyzer stack such that a combined gas of the diluent gas and the anode-side gas exits an outlet of the anode side;
FIG. 3C is a schematic view of the electrolyzer of FIG. 2 showing the anode-side dilution system in a shutdown state where the anode-side dilution system delivers a diluent gas to the anode side of the electrolyzer stack and where deionized water is not delivered to the anode side;
FIG. 4 is a schematic view of another embodiment of an anode-side dilution system;
FIG. 5 is a schematic view of yet another embodiment of an anode-side dilution system;
FIG. 6 is a schematic view of another embodiment of an anode-side dilution system for use in an electrolysis system having more than one electrolyzer stack; and
FIG. 7 is a schematic of a control system for use with the electrolysis systems of FIG. 2 or FIGS. 4-6.

### DETAILED DESCRIPTION

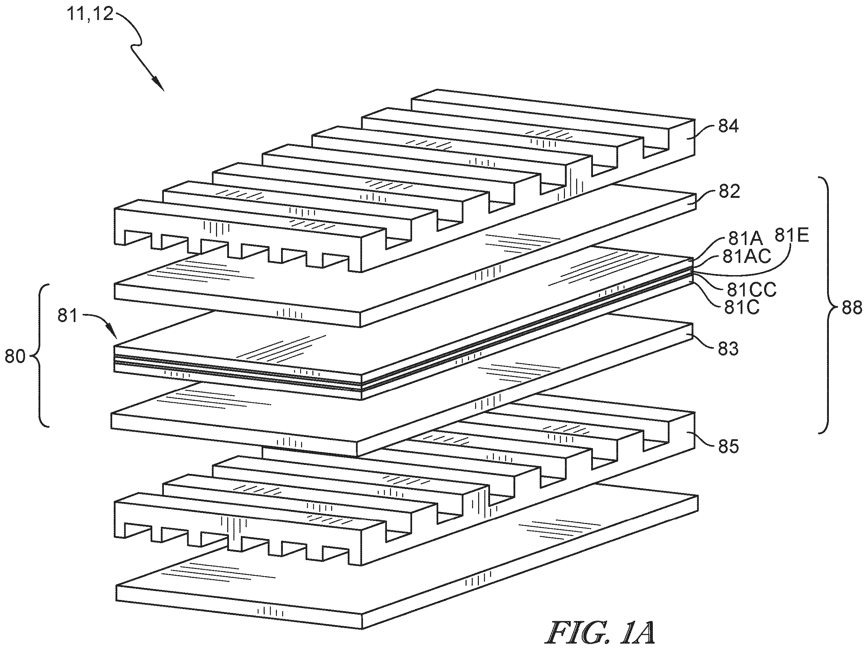

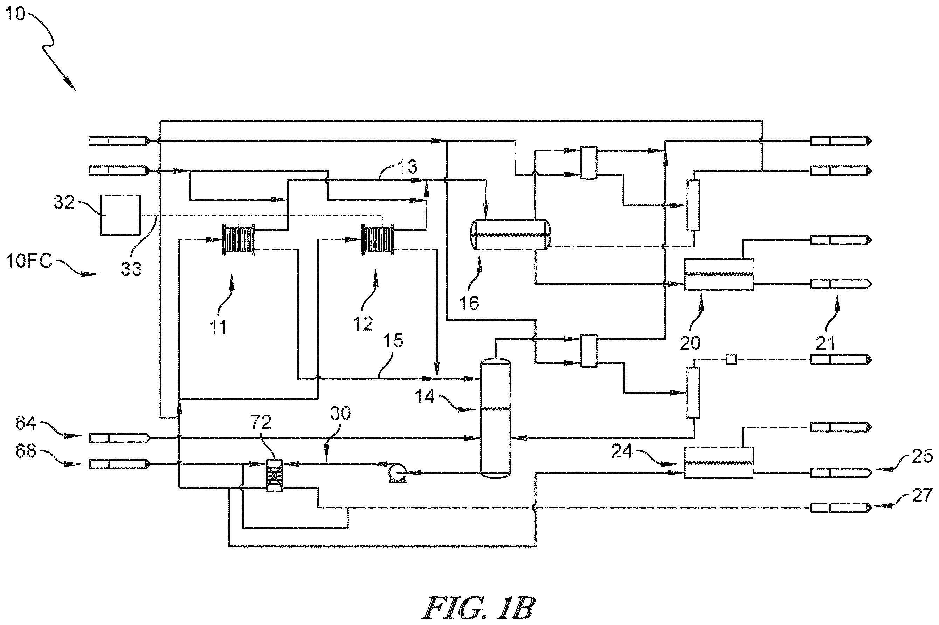

As shown in FIGS. 1A and 1B, electrolysis systems 10 are typically configured to utilize water and electricity to produce hydrogen and oxygen. An electrolysis system 10 typically includes one or more electrolyzer cells 80 that utilize electricity to chemically produce substantially pure hydrogen 13 and oxygen 15 from deionized water 30. Often the electrical source for the electrolysis systems 10 is produced from power or energy generation systems, including renewable energy systems such as wind, solar, hydroelectric, and geothermal sources for the production of green hydrogen. In turn, the pure hydrogen produced by the electrolysis systems 10 is often utilized as a fuel or energy source for those same power generation systems, such as fuel cell systems. Alternatively, the pure hydrogen produced by the electrolysis systems 10 may be stored for later use.

The typical electrolyzer cell 80, or electrolytic cell, is comprised of multiple assemblies compressed and bound into a single assembly, and multiple electrolyzer cells 80 may be stacked relative to each other, along with bipolar plates (BPP) 84, 85 therebetween, to form an electrolyzer stack (for example, electrolyzer stacks 11, 12 in FIG. 1B). Each electrolyzer stack 11, 12 may house a plurality of electrolyzer cells 80 connected together in series and/or in parallel. The number of electrolyzer stacks 11, 12 in the electrolysis systems 10 can vary depending on the amount of power required to meet the power need of any load (e.g., fuel cell stack). The number of electrolyzer cells 80 in an electrolyzer stack 11, 12 can vary depending on the amount of power required to operate the electrolysis systems 10 including the electrolyzer stack 11, 12.

An electrolyzer cell 80 includes a multi-component membrane electrode assembly (MEA) 81 that has an electrolyte 81E, an anode 81A, and a cathode 81C. Typically, the anode 81A, cathode 81C, and electrolyte 81E of the membrane electrode assembly (MEA) 81 are configured in a multi-layer arrangement that enables the electrochemical reaction to produce hydrogen and/or oxygen via contact of the water with one or more gas diffusion layers 82, 83. The gas diffusion layers (GDL) 82, 83, which may also be referred to as porous transport layers (PTL), are typically located on one or both sides of the MEA 81. Bipolar plates (BPP) 84, 85 often reside on either side of the GDLs and separate the individual electrolyzer cells 80 of the electrolyzer stack 11, 12 from one another. One bipolar plate 85 and the adjacent gas diffusion layers 82, 83 and MEA 81 can form a repeating unit 88.

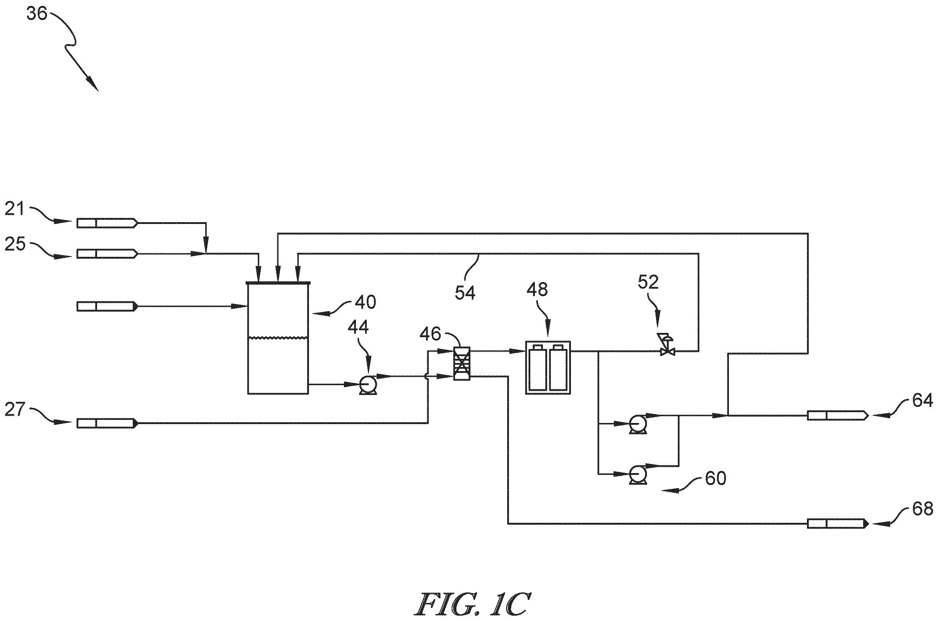

As shown in FIGS. 1B and 1C, an exemplary electrolysis system 10 can include two electrolyzer stacks 11, 12 and a fluidic circuit 10FC including the various fluidic pathways shown in FIGS. 1B and 1C that is configured to circulate, inject, and purge fluid and other components to and from the electrolysis systems 10. A person skilled in the art would understand that one or a variety of a number of components within the fluidic circuit 10FC, as well as more or less than two electrolyzer stacks 11, 12, may be utilized in the electrolysis systems 10. For example, the electrolysis systems 10 may include one electrolyzer stack 11, and in other examples, the electrolysis systems 10 may include three or more electrolyzer stacks.

The electrolysis systems 10 may include one or more types of electrolyzer stacks 11, 12 therein. In the illustrated embodiment, a polymer electrolyte membrane (PEM) electrolyzer cell 80 may be utilized in the stacks 11, 12. A PEM electrolyzer cell 80 typically operates at about 4°C to about 150°C, including any specific or range of temperatures comprised therein. A PEM electrolyzer cell 80 also typically functions at about 100 bar or less, but can go up to about 1000 bar (including any specific or range of pressures comprised therein), which reduces the total energy demand of the system. A standard electrochemical reaction that occurs in a PEM electrolyzer cell 80 to produce hydrogen is as follows.
- Anode: 2H₂O → O₂ + 4H⁺ + 4e⁻
- Cathode: 4H⁺ + 4e⁻ → 2H₂
- Overall: 2H₂O (liquid) → 2H₂ + O₂

Additionally, a solid oxide electrolyzer cell 80 may be utilized in the electrolysis systems 10. A solid oxide electrolyzer cell 80 will function at about 500°C to about 1000°C, including any specific or range of temperatures comprised therein. A standard electrochemical reaction that occurs in a solid oxide electrolyzer cell 80 to produce hydrogen is as follows.
- Anode: 20²⁻ → O₂ + 4e⁻
- Cathode: 2H₂O + 4e⁻ → 2H₂ + 2O²⁻
- Overall: 2H₂O (gas) → 2H₂ + O₂

Moreover, an AEM electrolyzer cell 80 may be utilized, which uses an alkaline media. An exemplary AEM electrolyzer cell 80 is an alkaline electrolyzer cell 80. Alkaline electrolyzer cells 80 comprise aqueous solutions, such as potassium hydroxide (KOH) and/or sodium hydroxide (NaOH), as the electrolyte. Alkaline electrolyzer cells 80 typically perform at operating temperatures ranging from about 0°C to about 150°C, including any specific or range of temperatures comprised therein. Alkaline electrolyzer cell 80 generally operate at pressures ranging from about 1 bar to about 100 bar, including any specific or range of pressures comprised therein. A typical hydrogen-generating electrochemical reaction that occurs in an alkaline electrolyzer cell 80 is as follows.
- Anode: 4OH⁻ → O₂ + 2H₂O + 4e⁻
- Cathode: 4H₂O + 4e⁻ → 2H₂ + 4OH⁻
- Overall: 2 H₂O → 2H₂ + O₂

As shown in FIG. 1B, the electrolyzer stacks 11, 12 include one or more electrolyzer cells 80 that utilize electricity to chemically produce substantially pure hydrogen and oxygen from water. In turn, the pure hydrogen produced by the electrolyzer may be utilized as a fuel or energy source. As shown in FIG. 1B, the electrolyzer stack 11, 12 outputs the produced hydrogen along a fluidic connecting line 13 to a hydrogen separator 16, and also outputs the produced oxygen along a fluidic connecting line 15 to an oxygen separator 14.

The hydrogen separator 16 may be configured to output pure hydrogen gas and also send additional output fluid to a hydrogen drain tank 20, which then outputs fluid to a deionized water drain 21. The oxygen separator 14 may output fluid to an oxygen drain tank 24, which in turn outputs fluid to a deionized water drain 25. A person skilled in the art would understand that certain inputs and outputs of fluid may be pure water or other fluids such as coolant or byproducts of the chemical reactions of the electrolyzer stacks 11, 12. For example, oxygen and hydrogen may flow away from the cell stacks 11, 12 to the respective separators 14, 16. The system 10 may further include a rectifier 32 configured to convert electricity 33 flowing to the cell stacks 11, 12 from alternating current (AC) to direct current (DC).

The deionized water drains 21, 25 each output to a deionized water tank 40, which is part of a polishing loop 36 of the fluidic circuit 10FC, as shown in FIG. 1C. Water with ion content can damage electrolyzer stacks 11, 12 when the ionized water interacts with internal components of the electrolyzer stacks 11, 12. The polishing loop 36, shown in greater detail in FIG. 1C, is configured to deionize the water such that it may be utilized in the cell stacks 11, 12 and not damage the cell stacks 11, 12.

In the illustrated embodiment, the deionized water tank 40 outputs fluid, in particular water, to a deionized water polishing pump 44. The deionized water polishing pump 44 in turn outputs the water to a water polishing heat exchanger 46 for polishing and treatment. The water then flows to a deionized water resin tank 48.

Coolant is directed through the electrolysis systems 10, in particular through a deionized water heat exchanger 72 that is fluidically connected to the oxygen separator 14. The coolant used to cool said water may also be subsequently fed to the water polishing heat exchanger 46 via a coolant input 27 for polishing. The coolant is then output back to the deionized water heat exchanger 72 for cooling the water therein.

After the water is output from the deionized water polishing heat exchanger 46 and subsequently to the deionized water resin tank 48, a portion of the water may be fed to deionized water high pressure feed pumps 60. Another portion of the water may be fed to a deionized water pressure control valve 52, as shown in FIG. 1C. The portion of the water that is fed to the deionized water pressure control valve 52 flows through a recirculation fluidic connection 54 that allows the water to flow back to the deionized water tank 40 for continued polishing.

In some embodiments, the electrolysis systems 10 may increase deionized water skid for polishing water flow to flush out ions within the water at a faster rate. The portion of the water that is fed to the deionized water high pressure feed pumps 60 is then output to a deionized water feed 64, which then flows into the oxygen separator 14 for recirculation and eventual reusage in the electrolyzer stacks 11, 12. This process may then continuously repeat.

The electrolysis systems 10 described herein, may be used in stationary and/or immovable power system, such as industrial applications and power generation plants. The electrolysis systems 10 may also be implemented in conjunction with other electrolysis systems 10.

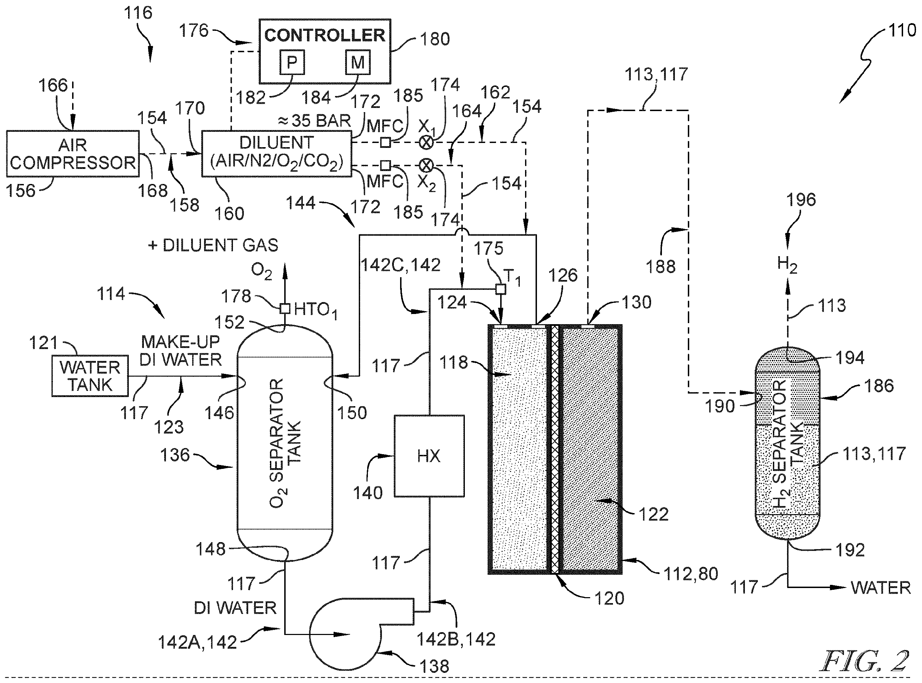

The present disclosure provides an anode-side dilution system 116 for use in an electrolysis system 110, as shown in FIG. 2.

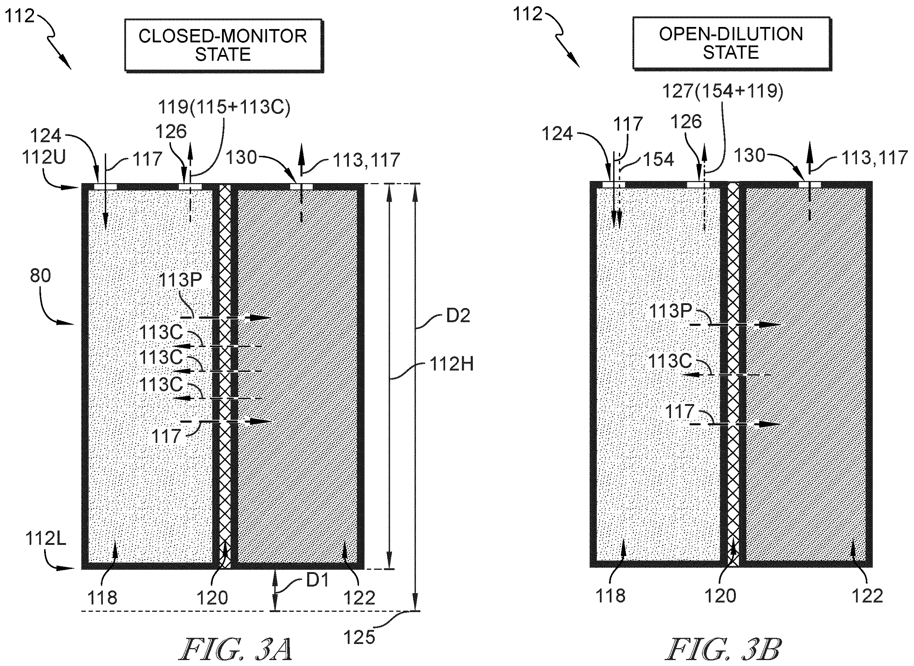

The anode-side dilution system 116, shown in FIGS. 2, 3A, and 3B, is configured to dilute anode-side gas 119 on an anode side 118 of the electrolyzer stack 112 by supplying a diluent gas 154 to the anode-side dilution system 116 to blend and/or mix with the gas 119 to form a combined gas 127. As shown in FIG. 3B, the combined gas 127 (the anode-side gas 119 and the diluent gas 154 combined) is directed out of the electrolyzer stack 112. The anode-side dilution system 116, for example, may supply the diluent gas 154 on the anode side 118 of the electrolyzer stack 112 when the hydrogen-to-oxygen (HTO) ratio of the anode-side gas 119 on the anode side 118 is at or above a predetermined threshold. For example, if the electrolysis system 110 is operating at a low current density and/or if the anode-side gas 119 has a HTO ratio at or above a predetermined threshold, the anode-side dilution system 116 supplies diluent gas 154 to the anode side 118 to blend and/or mix with the anode-side gas 119 to lower the HTO ratio of the anode-side gas 119 as described in further detail below.

The anode-side dilution system 116 may also supply diluent gas 154 on the anode side 118 to blend and/or mix with the anode-side gas 119 to lower the HTO ratio of the anode-side gas 119 if the electrolysis system 110 is operating at a high current density and the anode-side gas 119 has a HTO ratio at or above a predetermined threshold. The predetermined threshold for the HTO ratio may be at least 2%, at least 1.5%, at least 1%, or any specific ratio above a predetermined threshold determined by government regulation and/or an operator of the electrolysis system 110.

Current and/or current density refers to the amount of electric current flowing through the electrolysis system 110. A low current and/or current density may be between about 1% of the electric current capacity and about 30% of the electric current capacity, between about 0.5% to about 1% of the electric current capacity, or as otherwise understood in the art. A low current and/or current density may be between about 0.1 A/cm² and about 0.5 A/cm², including any specific current and/or current density or range of current and/or current densities comprised therein, or as otherwise understood in the art. A high current and/or current density may be the rated electric current capacity of the electrolyzer stack or as otherwise understood in the art. A high current and/or current density may be between about 2A/cm² and about 5 A/cm², more than about 5 A/cm², including any specific current and/or current density or range of current and/or current densities comprised therein, or as otherwise understood in the art.

Accordingly, the anode-side dilution system 116 is configured to extend, prolong, and/or maximize the operating life of the electrolyzer stack 112. For example, the anode-side dilution system 116 may counter, reduce, prevent, and/or prolong the presence of degradation of one or more catalyst layers 81AC, 81CC of the electrolyzer stack 112 illustrated in FIG. 1A. The anode-side dilution system 116 also minimizes, eliminates, and/or prevents the need to shut down the electrolysis system 110 for HTO reasons. Shutdown of the electrolysis system 110 may be a typical shutdown, an emergency stop, or any other nonfunctional or inoperable state where the electrolysis system 110 has no power and the electrolyzer stack 112 is de-energized.

The electrolysis system 110 of the present disclosure may be the electrolysis system 10 shown in FIGS. 1A-1C. However, a person of ordinary skill in the art would appreciate that the anode-side dilution system 116 may be incorporated into any electrolysis system where it is desired to dilute the anode-side gas 119 with the diluent gas 154 when the anode-side gas 119 has an HTO ratio above a predetermined threshold. The electrolyzer stack 112 of FIGS. 2-3C may operate the same or similar to the electrolyzer stacks 11, 12 of FIGS. 1A-1C. However, a person of ordinary skill in the art would appreciate that the anode-side dilution system 116 of the present disclosure may be used with any electrolyzer stack, particularly where it is desired to dilute the anode-side gas 119 with the diluent gas 154. The electrolyzer stack 112 extends upwardly away from a floor 125 and in one embodiment, at least the anode-side dilution system 116 is arranged above the electrolyzer stack 112.

Referring to FIGS. 2-3C, the electrolysis system 110 includes a water source 114, the electrolyzer stack 112, a hydrogen collector 196, and/or the anode-side dilution system 116. The water source 114 provides deionized water 117 to the electrolyzer stack 112. The electrolyzer stack 112 utilizes electricity to chemically produce substantially pure hydrogen gas 113 and oxygen gas 115 from the deionized water 117. The hydrogen collector 196 collects, holds, and/or distributes hydrogen gas 113 and deionized water 117 throughout the electrolysis system 110. The anode-side dilution system 116 selectively dilutes the anode-side gas 119 with the diluent gas 154. The anode-side gas 119 is the combination of the oxygen gas 115 produced at the anode side 118 and crossover hydrogen gas 113C as illustrated in FIG. 3A and described in further detail below. The anode-side dilution system 116 dilutes the anode-side gas 119 with the diluent gas 154 when the HTO ratio of the anode-side gas is at or above a predetermined threshold. The diluent gas 154 may be ambient air, nitrogen (N2), generated oxygen (O₂), or carbon dioxide (CO₂) gas.

The electrolyzer stack 112 comprises a plurality of electrolyzer cells 80, as shown in FIGS. 3A-3C. In the illustrative embodiment, the plurality of electrolyzer cells 80 are the electrolyzer cells 80 described above and/or as shown in FIG. 1A. However, a person of ordinary skill in the art would appreciate that the electrolyzer stack 112 may comprise other types of electrolyzer cells. The electrolyzer stack 112 may comprise a total number of 424 electrolyzer cells 80, less than 424 electrolyzer cells 80, or more than 424 electrolyzer cells 80. In other embodiments, the electrolyzer stack 112 may comprise between about 100 electrolyzer cells 80 and about 600 electrolyzer cells 80, including any specific number or range of electrolyzer cells 80 comprised therein. In some embodiments, the number of electrolyzer cells 80 may range from about 100 to about 200, from 200 to about 300, from about 300 to about 400, from about 400 to about 500, or from about 500 to about 600 electrolyzer cells 80, including any specific number or range of numbers comprised therein and/or within the noted ranges.

Referring now to FIGS. 3A-3C, the electrolyzer stack 112 extends between a lower end 112L and an upper end 112U to define a height 112H of the electrolyzer stack. The height 112H may be about 3 feet, less than 3 feet, or more than 3 feet. In other embodiments, the height 112H may be between about 1 foot and about 4 feet, including any specific height or range of heights comprised therein. The lower end 112L is a first distance D1 from the floor 125 and the upper end 112U is a second distance D2 from the floor 125 that is greater than the first distance D1. In some embodiments, the first distance D1 may be between about 0 inches and about 24 inches, including any specific distance or range of distances comprised therein.

The plurality of electrolyzer cells 80 of the electrolyzer stack 112 are arranged and/or configured between the upper end 112U and the lower end 112L of the electrolyzer stack 112 to define the anode side 118, a membrane 120, and a cathode side 122 of the electrolyzer stack 112, as shown in FIGS. 2-3B. In other words, the gas diffusion layer 82, the anode 81A, and an anode catalyst layer 81AC of each electrolyzer cell 80 in the electrolyzer stack 112 cooperate and/or are configured to define the anode side 118 of the electrolyzer stack 112. Similarly, the electrolyte 81E of each electrolyzer cell 80 cooperate and/or are configured to define the membrane 120 of the electrolyzer stack 112. Likewise, a cathode catalyst layer 81CC, the cathode 81C, and the gas diffusion layer 83 of each electrolyzer cell 80 that are shown in FIG. 1A cooperate and/or are configured to define the cathode side 122 of the electrolyzer stack 112. In some embodiments, a membrane plane of the electrolyzer cell 80, which is delimited by the largest dimension of the membrane 120 may be parallel to the gravity field. In other embodiments, a membrane plane of the electrolyzer cell 80, which is delimited by the largest dimension of the membrane 120 may be perpendicular to the gravity field.

The anode side 118 extends between the upper end 112U and the lower end 112L of the electrolyzer stack 112 and is configured to convert deionized water 117 into oxygen gas 115 and hydrogen protons 113P with the anode catalyst 81AC, as shown in FIGS. 3A-3B. The membrane 120 also extends between the upper end 112U and the lower end 112L. The hydrogen protons 113P move laterally across the membrane 120 and into the cathode side 122. The cathode side 122 extends between the upper end 112U and the lower end 112L of the electrolyzer stack 112 and is configured to convert the hydrogen protons 113P into hydrogen gas 113 with the cathode catalyst 81CC. During this process, crossover hydrogen gas 113C, is drawn through the membrane 120 from the cathode side 122 and into the anode side 118 and mixes and/or blends with the oxygen gas 115 to provide the anode-side gas 119.

Crossover hydrogen gas 113C is hydrogen gas that fails to react with the anode catalyst 81AC and instead mixes and/or blends with the oxygen gas 115. The anode catalyst 81AC may be a gas recombination catalyst that works with the oxygen gas 115 to facilitate the hydrogen gas 113 from the cathode side 122 that comes back over the membrane 120 reacting with the oxygen gas 115. Any hydrogen gas 113 that fails to react with the oxygen gas 115 during this process and instead mixes and/or blends with the oxygen gas 115 is referred to as crossover hydrogen gas 113C. The mix and/or blend of the crossover hydrogen gas 113C and the oxygen gas 115 is referred to as the anode-side gas 119.

In some embodiments, it may be desired to minimize the HTO ratio (i.e., the ratio of crossover hydrogen gas 113C to oxygen gas 115) of the anode-side gas 119. For example, the electrolysis system 110 and/or the electrolyzer stack 112 may be required to shut down if the HTO ratio is at or greater than a predetermined threshold. The predetermined threshold may be about 2% HTO ratio in the anode-side gas 119. In other embodiments, the predetermined threshold may be a different HTO ratio as described above.

The anode side 118 is formed to include an inlet 124 and an outlet 126, as shown in FIGS. 2-3C. In some embodiments, the inlet 124 and the outlet 126 are located on the same end of the membrane 120. In other embodiments, the inlet 124 and the outlet 126 are located on opposite ends of the membrane 120. The inlet 124 is fluidically coupled to the water source 114 to receive deionized water 117 from the water source 114. In the present disclosure, the outlet 126 is fluidically coupled to the water source 114 to distribute oxygen gas 115 and/or the anode-side gas 119 from the anode 118 to other components of the electrolysis system 110.

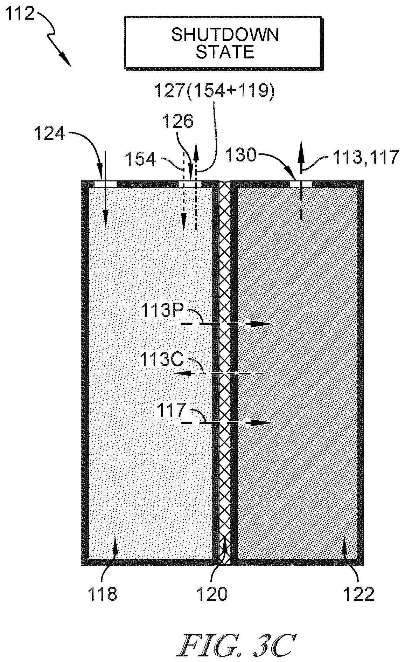

The inlet 124 and/or the outlet 126 are also fluidically coupled to the anode-side dilution system 116 to distribute the diluent gas 154 therethrough. In one embodiment, both the inlet 124 and the separator tank 136 are fluidically coupled to the anode-side dilution system 116 such that the diluent gas 154 may be fed through both directly the inlet 124 and the oxygen inlet 150 of the separator tank 136. The diluent gas 154 may be fed upon operation of the anode-side dilution system 116 to blend and/or mix with the anode-side gas 119 to lower the HTO ratio of the anode-side gas 119. In another embodiment, only the separator tank 136 is fluidically coupled to the anode-side dilution system 116 such that the diluent gas 154 is fed through the oxygen conduit 144 towards the oxygen inlet 150 of the separator tank 136 to blend and/or mix with the anode-side gas 119 to lower the HTO ratio of the anode-side gas 119. In yet another embodiment, only the inlet 124 is fluidically coupled to the anode-side dilution system 116 such that the diluent gas 154 is fed through the inlet 124 to blend and/or mix with the anode-side gas 119 to lower the HTO ratio of the anode-side gas 119. In some embodiments, the combination of the diluent gas 154 and the anode-side gas 119 is then directed out of the outlet 126 and to the water source 114. In some embodiments, as shown in FIG. 3C, the diluent gas 154 may be fed through the anode outlet 126 during a shutdown state.

The cathode side 122 is formed to include an outlet 130 as shown in FIGS. 2-3B. The outlet 130 is fluidically coupled to the hydrogen collector 196 to distribute hydrogen gas 113 and/or deionized water 117 thereto.

In the illustrated embodiment shown in FIG. 2, the water source 114 includes an oxygen separator tank 136, a pump 138, a heat exchanger 140, a water conduit 142, and/or an oxygen conduit 144. In other embodiments, a person of ordinary skill in the art would appreciate that the water source 114 may include a water tank 121 holding deionized water 117 and a conduit 123 fluidically coupling the water tank 121 and the anode side 118 of the electrolyzer stack 112. In other words, the water source 114 may be any means or component known in the art to deliver deionized water 117 from the water reservoir 121 to the anode side 118 of the electrolyzer stack 112. In some embodiments, the water source 114 may only be the water tank 121 and the conduit 123. A person of ordinary skill in the art would appreciate that the water source 114 may be the deionized water feed 64 shown and described with reference to FIGS. 1B and 1C and/or the polishing loop 36 and its components (e.g. drains 21, 25, tank 40, hydrogen drain tank 20, oxygen drain tank 24, deionized water resin tank 48) shown and described with reference to FIGS. 1B and 1C.

The oxygen separator tank 136 collects, holds, and/or distributes oxygen gas 115 and deionized water 117 throughout the electrolysis system 110, as shown in FIG. 2. The oxygen separator tank 136 is formed to include a water inlet 146, a water outlet 148, an oxygen inlet 150, and/or an oxygen outlet 152. The water inlet 146 is configured to direct deionized water 117 from other components of the electrolysis system 110 into the oxygen separator tank 136. The water outlet 148 is fluidically coupled to the pump 138 via a first segment 142A of the water conduit 142 to direct deionized water 117 from the oxygen separator tank 136 to the pump 138.

The oxygen inlet 150 is fluidically coupled to the outlet 126 of the anode side 118 via the oxygen conduit 144 to direct oxygen gas 115 from the anode side 118 to the oxygen separator tank 136. The oxygen outlet 152 is configured to direct oxygen gas 115 from the oxygen separator tank 136 to other components of the electrolysis system 110.

The pump 138 is fluidically coupled between the oxygen separator tank 136 and the heat exchanger 140, as shown in FIG. 2. The pump 138 is configured to pump deionized water 117 received from the oxygen separator tank 136 via the first segment 142A of the water conduit 142 towards the heat exchanger 140 via a second segment 142B of the water conduit 142.

The heat exchanger 140 is fluidically coupled between the pump 138 and the inlet 124 of the anode side 118, as shown in FIG. 2. The heat exchanger 140 is configured to heat or cool the deionized water 117 received from the pump 138 via the second segment 142B of the water conduit 142 to a desired temperature. For example, the desired temperature may be between about 20°C to about 70°C (e.g. electrolyzer stack operational temperatures), including any specific temperature or range of temperatures comprised therein. In another embodiment, the desired temperature may be between about 4°C to about 70°C, including any specific temperature or range of temperatures comprised therein. The heat exchanger 140 is further configured to distribute the deionized water 117 to the inlet 124 of the anode side 118 via a third segment 142C of the water conduit 142. In other embodiments, the water source 114 may not include the pump 138 and/or the heat exchanger 140.

The hydrogen collector 196 includes a hydrogen separator tank 186 and/or a hydrogen conduit 188. The hydrogen separator tank 186 collects, holds, and/or distributes hydrogen gas 113 and deionized water 117 throughout the electrolysis system 110. The hydrogen conduit 188 is coupled between the outlet 130 of the cathode side 122 and the hydrogen separator tank 186 to direct hydrogen gas 113 and/or deionized water 117 from the electrolyzer stack 112 and into the hydrogen separator tank 186.

The hydrogen separator tank 186 is formed to include a hydrogen inlet 190, a water outlet 192, and/or a hydrogen outlet 194, as shown in FIG. 2. The water inlet 190 is fluidically coupled to the cathode side 122 of the electrolyzer stack 112 via the hydrogen conduit 188 to receive hydrogen gas 113 and/or deionized water 117. The water outlet 192 is configured to direct deionized water 117 to other components of the electrolysis system 110. For example, other components of the electrolysis system 110 may include, but is not limited to, the deionized water feed 64 shown and described with reference to FIGS. 1B and 1C and/or the polishing loop 36 and its components (e.g. drains 21, 25, tank 40, hydrogen drain tank 20, oxygen drain tank 24, deionized water resin tank 48) shown and described with reference to FIGS. 1B and 1C.

In some embodiments, other components of the electrolysis system 110 may include the water tank 121, as shown in FIG. 2. The hydrogen outlet 194 is configured to direct hydrogen gas 113 to other components of the electrolysis system 110. For example, other components of the electrolysis system 110 may include, but is not limited to, the hydrogen separator 16 and/or the hydrogen drain tank 20 shown and described with references to FIGS. 1B and 1C.

The anode-side dilution system 116 is configured to direct the diluent gas 154 to the anode side 118 of the electrolyzer stack 112 when the HTO ratio of the anode-side gas 119 is at or above the predetermined threshold to lower the HTO ratio of the anode-side gas 119. The anode-side dilution system 116 includes an air compressor 156, a compressed-air conduit 158, a diluent gas tank 160, a first diluent-delivery conduit 162, and a second diluent-delivery conduit 164 as shown in Fig. 2. In some embodiments, the anode-side dilution system 116 may have only one diluent-delivery conduit 162, 164 or more than two diluent-delivery conduits 162, 164. In some embodiments, the anode-side dilution system 116 may not include the air compressor 156.

The air compressor 156 compresses the diluent gas 154 to a predetermined pressure. In embodiments having the air compressor 156, the diluent gas 154 is air. In one embodiment, the predetermined pressure is at or about 35 bar. In other embodiments, the predetermined pressure may be between about 1 bar and about 40 bar, between about 40 to about 75 bar, including any specific pressure or range of pressures, or as otherwise understood in the art. In some embodiments, the predetermined pressure may be at or above the operating pressure of the electrolyzer stack 112. The air compressor 156 is formed to include an inlet 166 and an outlet 168. The inlet 166 is configured to collect the diluent gas 154 from a diluent gas source (not shown) into the air compressor 156. The diluent gas source may be ambient air. The outlet 168 directs compressed diluent gas 154 to the diluent gas tank 160 via the compressed-air conduit 158.

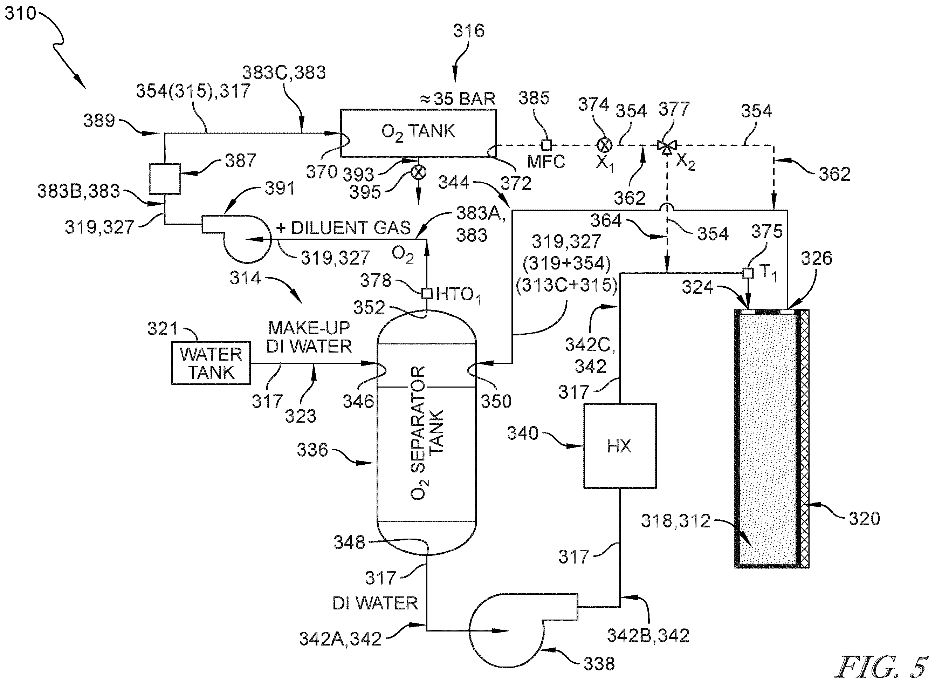

The diluent gas tank 160 collects, stores, and/or distributes the diluent gas 154. The diluent gas tank 160 is configured to store the diluent air 154 at the predetermined pressure. In some embodiments, the predetermined pressure may be at or about 35 bar. In other embodiments, the predetermined pressure may be between about 1 bar and about 40 bar, including any specific pressure or range of pressures, or as otherwise understood in the art. In some embodiments, the predetermined pressure may be at or above the operating pressure of the electrolyzer stack 112. The diluent gas tank 160 is formed to include a tank inlet 170 and one or more tank outlets 172. The tank inlet 170 is configured to collect the diluent gas 154 from the air compressor 156 via the compressed-air conduit 158. The one or more tank outlets 172 are configured to direct the compressed diluent gas 154 to the anode side 118 of the electrolyzer stack 112 via the first diluent-delivery conduit 162 and/or the second diluent-delivery conduit 164. In some embodiments, the tank inlet 170 may be fluidically coupled directly to the diluent gas source (not shown), such as ambient air, compressed nitrogen (N₂) stored in bottles or liquid nitrogen (LN₂), carbon dioxide, or generated oxygen. The tank inlet 170 may be fluidically coupled to an oxygen circulation system 389 described in further detail below with reference to the embodiment shown in FIG. 5.

The first diluent-delivery conduit 162 fluidically couples one of the tank outlets 172 to the oxygen conduit 144 such that when the first diluent-delivery conduit 162 is open, the compressed diluent gas 154 is directed via the oxygen conduit 144 towards the oxygen inlet 150 of the separator tank 136 . The second diluent-delivery conduit 164 fluidically couples another of the tank outlets 172 to the third segment 142C of the water conduit 142 such that when the second diluent-delivery conduit 164 is open, the compressed diluent gas 154 is directed into the anode side 118 via the inlet 124.

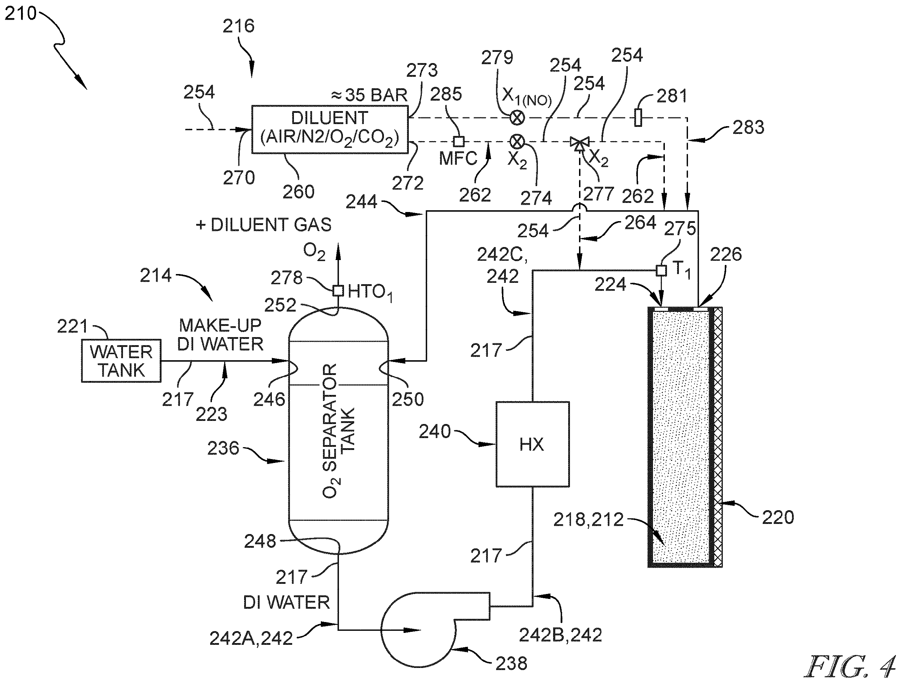

In some embodiments, the diluent gas tank 160 only includes one tank outlet 172. In such embodiments, the first diluent-delivery conduit 162 may fluidically couple the tank outlet 172 to the oxygen conduit 144 and the second diluent-delivery conduit 164 may branch off of the first diluent-delivery conduit 162 to fluidically couple to the third segment 142C of the water conduit 142. Such an embodiment may be the embodiment shown and described with reference to FIGS. 4 and 5. In other such embodiments, the anode-side dilution system 116 may include only the first diluent-delivery conduit 162 or only the second diluent-delivery conduit 164. In other words, the anode-side dilution system 116 may only include the first diluent-delivery conduit 162 fluidically coupling the tank outlet 172 to the oxygen conduit 144. Alternatively, the anode-side dilution system 116 may only include the second diluent-delivery conduit 164 fluidically coupling the tank outlet 172 to the third segment 142C of the water conduit 142.

The anode-side dilution system 116 further includes one or more valves 174 coupled to the first diluent-delivery conduit 162 and the second diluent-delivery conduit 164. The one or more valves 174 are changeable between a closed configuration and an open configuration. When the valves 174 are in the closed configuration, the diluent gas 154 is blocked from flowing past the valves 174 and into the anode side 118. When the valves 174 are in the open configuration, the diluent gas 154 flows past the valves and through the oxygen conduit 144 towards the oxygen inlet 150 of the separator tank 136 or directly to the anode inlet 124 into the anode side 118 to lower the HTO ratio of the anode-side gas 119. The valves 174 are automatic valves.

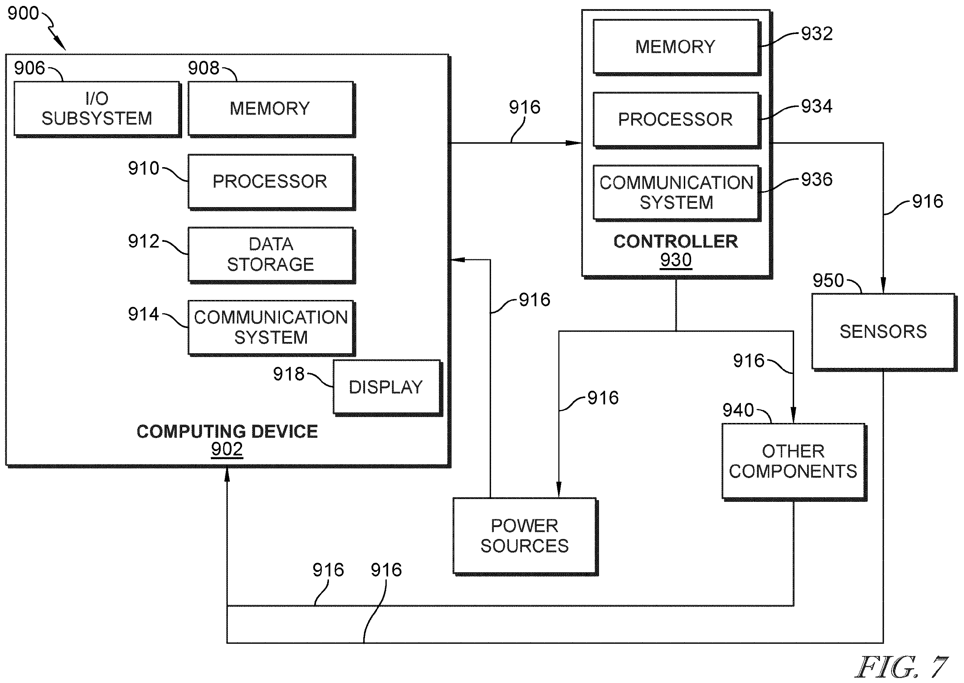

As such, the anode-side dilution system 116 also includes a control system 176 to change the one or more valves 174 between the closed configuration and the open configuration. The control system 176 includes an HTO sensor 178 to measure the HTO ratio of the anode-side gas 119 and a controller 180 configured to determine whether the measured HTO ratio is at or above the predetermined threshold. Alternatively, the control system 176 may be implemented as a control system 900 as described in further detail below with reference to FIG. 7.

The HTO sensor 178 is coupled at, near, and/or downstream of the oxygen outlet 152 of the oxygen separator tank 136 and is configured to measure the HTO ratio of the anode-side gas 119 and/or the combined gas 127. The controller 180 includes a processor 182 and a memory 184 storing instructions to, when executed by the processor 182, compare the measured HTO ratio of the anode-side gas 119 and/or the combined gas 127 with a predetermined threshold. If the measured HTO ratio is at or greater than the predetermined ratio, then the controller 176 instructs at least one valve 174 of the one or more valves 174 to change from the closed configuration to the open configuration and/or instructs at least one valve 174 of the one or more valves 174 to remain in the open configuration to direct the diluent gas 154 through the oxygen conduit 144 towards the oxygen inlet 150 of the separator tank 136 or directly to the anode inlet 124 into the anode side 118 to mix with the anode-side gas 119 and lower the HTO ratio. If the measured HTO ratio is less than the predetermined ratio, then the controller 176 instructs the one or more valves 174 to remain in the closed configuration and/or instructs the at least one valve 174 of the one or more valves 174 to change from the open configuration to the closed configuration.

The control system 176 may further include one or more mass flow rate controllers 185 coupled to the first diluent-delivery conduit 162 and the second diluent-delivery conduit 164. The one or more flow controllers 185 control the mass flow rate of the diluent gas 154 when a respective valve 174 of the one or more valves 174 is in the open configuration. For example, the one or more flow controller 185 may control the mass flow rate of the diluent gas 154 to be less than 500 standard liter per minute (slm), between about 200 slm and about 500 slm, including any specific mass flow rate or range of mass flow rates comprised therein. In some embodiments, the mass flow rate of the diluent gas 154 may be the about or the same as the mass flow rate of the oxygen gas 115 exiting the anode side 118. In such embodiments, the HTO ratio of the anode-side gas 119 may reduce by about 50%.

The anode-side dilution system 116 is operable between a closed-monitor state and an open-dilution state. In the closed-monitor state, schematically represented in FIGS. 2 and 3A, the one or more valves 174 are in the closed configuration and the HTO sensor 178 continuously measures the HTO ratio of the anode-side gas 119. Meanwhile, the electrolyzer stack 112 operates as described above. The anode inlet 124 receives deionized water 117 from the water source 114 and the deionized water 117 reacts with the anode catalyst 81AC to produce oxygen gas 115 and hydrogen protons 113P. The hydrogen protons 113P and leftover deionized water 117 are drawn across the membrane 120 to react with the cathode catalyst 81CC to produce hydrogen gas 113 which exits the anode outlet 130. At the same time, crossover hydrogen 113C crosses back over the membrane 120 to the anode side 118 to provide the anode-side gas 119, which is both the oxygen gas 115 and the crossover hydrogen 113C. The anode-side gas 119 exits the anode outlet 126 and is directed to the oxygen separator tank 136. The HTO sensor 178 measures the concentration of hydrogen in the anode-side gas 119 (i.e., the HTO ratio) and the controller 180 compares the measured HTO ratio of the anode-side gas 119 to the predetermined threshold. If the measured HTO ratio of the anode-side gas 119 is less than the predetermined threshold, then the anode-side dilution system 116 remains in the closed-monitor state.

When the controller 180 determines that the measured HTO ratio of the anode-side gas 119 is at or greater than the predetermined threshold, the anode-side dilution system 116 changes to the open-dilution state, shown schematically in FIG. 3B. In the open-dilution state, at least one of the one or more valves 174 shown in FIG. 2 is changed to the open configuration so that the diluent air 154 is directed into the anode side 118 to mix with the anode-side gas 119 to form the combined gas 127. The combined gas 127 then exits the outlet 126 of the anode side 118 and the HTO sensor 178 continuously measures the HTO ratio of the combined gas 127.

In the embodiment shown schematically in FIG. 3B, only the valve 174 coupled to the first diluent-delivery conduit 162 changes to the open configuration when the anode-side dilution system 116 is in the open-dilution state. In such an embodiment, the diluent gas 154 is fed through the oxygen conduit 144 towards the oxygen inlet 150 of the separator tank 136 or directly to the anode inlet 124 of the anode side 118 and mixes with the anode-side gas 119 to provide the combined gas 127. The combined gas 127 then exits through the outlet 126 and is directed to the oxygen separator tank 136. The HTO sensor 178 measures the concentration of hydrogen in the combined gas 127 (i.e., the HTO ratio) and the controller 180 compares the measured HTO ratio of the combined gas 127 to the predetermined threshold. If the measured HTO ratio of the combined gas 127 is at or greater than the predetermined threshold, then the anode-side dilution system 116 remains in the open-dilution state. If the measured HTO ratio of the combined gas 127 is less than the predetermined threshold, the anode-side dilution system 116 changes back to the closed-monitor state. A person having ordinary skill in the art would appreciate that in such an embodiment, the anode-side dilution system 116 may include only the first diluent-delivery conduit 162, both the first diluent-delivery conduit 162 and the second diluent-delivery conduit 164, or another configuration of the diluent-delivery conduits 162, 164 shown and described herein.

Delivering diluent gas 154 through only the separator tank 136 and/or at least the separator tank 136 as compared to delivering diluent gas 154 through only the anode inlet 124 minimizes and/or reduces contamination of the electrolyzer stack 112 and/or the anode-side gas 119. Diluent gas 154, such as when the diluent gas 154 is ambient air, inherently has contaminants which could affect the quality of the anode-side gas 119 and/or the life of components of the electrolyzer stack 112. By delivering the diluent gas 154 through the anode outlet 126 and/or at least the anode outlet 126, more of the diluent gas 154 will exit back through the separator tank 136 as compared to the amount of the diluent gas 154 that would exit through the anode outlet 126 if delivered only through the anode inlet 124.

Furthermore, delivering diluent gas 154 through the separator tank 136 and/or at least the separator tank 136 minimizes and/or reduces the amount of energy consumed by the dilution system 116 as compared to delivering diluent gas 154 only through the anode inlet 124 because the anode outlet 126 has a lower pressure than the anode inlet 124. For example, the pressure at the anode outlet 126 may be about 50% less than the pressure at the anode inlet 124. In other embodiments, the pressure at the anode outlet 126 may be about 1% to about 50% less than the pressure at the anode inlet 124, about 20% to about 50% less than the pressure at the anode inlet 124, about 3% to about 6% less than the pressure at the anode inlet 124, including any specific or range of differences comprised therein. The pressure at the anode outlet 126 may be about 28 to about 29.5 bar while the pressure at the anode inlet 124 may be about 30 bar. As such, delivering the diluent gas 154 through at least the separator tank 136 or only the separator tank 136 requires storing and delivering the diluent gas 154 at a lower pressure, which uses less energy than storing and delivering the diluent gas 154 at a higher pressure.

In another embodiment, both the valve 174 coupled to the first diluent-delivery conduit 162 and the valve 174 coupled to the second diluent-delivery conduit 164 change to the open configuration when the anode-side dilution system 116 is in the open-dilution state. In other embodiments, only the valve 174 coupled to the second diluent-delivery conduit 164 changes to the open configuration when the anode-dilution system 116 is in the open-dilution state.

The control system 176 further includes a temperature sensor 175 coupled to the third segment 142C. The temperature sensor 175 is configured to monitor the temperature of the deionized water 117. In embodiments where the anode-side dilution system 116 includes both the first diluent-delivery conduit 162 and the second diluent-delivery conduit 164, the controller 180 may modulate the heat exchanger 140 depending on the temperature of the deionized water 117 detected by the temperature sensor 175.

The diluent gas 154 may be ambient air, nitrogen, oxygen, or carbon dioxide. An embodiment where the diluent gas is oxygen or generated oxygen is shown and described with reference to FIG. 4.

In embodiments where the diluent gas 154 is ambient air, the anode-side dilution system 116 includes the air compressor 156 and the air-delivery conduit 158 to compress and deliver the ambient air to the diluent gas tank 160. The ambient air 154 may be compressed and stored at or about 35 bar. In other embodiments, the ambient air 154 may be compressed and stored at another desired pressure disclosed herein. In some embodiments, the anode-side dilution system 116 may need to comprise materials free of oil and contaminant.

In embodiments where the diluent gas 154 is nitrogen, the anode-side dilution system 116 does not include the air compressor 156 and/or the air-delivery conduit 158. Rather, compressed nitrogen (N₂) stored in bottles or liquid nitrogen (LN₂) is delivered directly to and/or stored in the diluent gas tank 160 at or about 35 bar or above operating pressure of stack. In some embodiments, the compressed nitrogen may be stored between at or about 130 bar and at or about 200 bar and liquid nitrogen may be stored between at or about 15 bar and at or about 25 bar, including any specific or range of pressures comprised therein. In other embodiments, the nitrogen gas 154 may be compressed and stored at another desired pressure disclosed herein.

In embodiments where the diluent gas 154 is carbon dioxide, the anode-side dilution system 116 does not include the air compressor 156 and/or the air-delivery conduit 158. Rather, the carbon dioxide is delivered directly to and/or stored in the diluent gas tank 160 at, about, or above the operating pressure of the electrolyzer stack 112. In other embodiments, the carbon dioxide 154 may be compressed and stored at another desired pressure disclosed herein.

Carbon dioxide gas 154, when directed into the separator tank 136 and/or the anode inlet 124, also promotes the conversion of crossover hydrogen 113C into formic acid (HCOOH) in the presence of a catalyst, minimizing the HTO ratio of the anode-side gas 119. Furthermore, carbon dioxide gas 154 requires a smaller amount to store and deliver as compared to ambient air, nitrogen, or oxygen. Carbon dioxide may be introduced downstream of the anode outlet 126 to avoid decomposition of the HCOOH product at the high anode potential, to avoid exposing the formic acid catalyst to harsh and damaging conditions in the anode compartment, and to minimize contamination of the platinum recombination catalyst by the carbon monoxide side product.

The catalyst in such embodiments may be a heterogeneous catalyst, including but not limited to ruthenium-hydrotalcite and sulfur doped tin oxide. The catalyst may line the inside of a catalytic converter (not shown) fluidically coupled to the oxygen conduit 144 downstream of the anode outlet 126 to maximize the contact between the combined gas 127 and the catalyst. In some embodiments, the catalyst maybe localized downstream of the oxygen separator tank 136 to optimize the yield of the reaction, which may be different in the gas phase rather than in the mixed gas or liquid phase.

FIG. 4 shows an alternative embodiment of an electrolysis system 210 of the present disclosure. The electrolysis system 210 is substantially similar to the electrolysis system 110 shown in FIGS. 2-3B and described herein. Accordingly, similar reference numbers in the 200 series indicate features that are common between the electrolysis system 210 and the electrolysis system 110. The description of the FIGS. 2-3B is incorporated by reference to apply to FIG. 4, except in instances where there is conflict with the specific description of FIG. 4.

The electrolysis system 210 includes an anode-side dilution system 216. The anode-side dilution system 216 includes a diluent gas tank 260, a first diluent-delivery conduit 262 fluidically coupled between an outlet 272 of the diluent gas tank 260 and the oxygen conduit 244, a second diluent-delivery conduit 264 fluidically coupled between the first diluent-delivery conduit 262 and the third segment 242C of the water conduit 242, and a backup conduit 283 fluidically coupled between an outlet 273 of the diluent gas tank 260 and the oxygen conduit 244. In other embodiments, the anode-side distribution system 216 may have only the first diluent-delivery conduit 262 or another arrangement of diluent-delivery conduits described in other embodiments of the present disclosure.

The anode-side dilution system 216 also includes an automatic valve 274 coupled to the first diluent-delivery conduit 262, a three-way valve 277 coupled between the first diluent-delivery conduit 262 and the second diluent-delivery conduit 264, and a normally-open valve 279 coupled to the backup conduit 283. All of the valves 274, 277, 279 may communicate with the control system 176 as described with reference to the embodiment shown in FIGS. 2-3B. In some embodiments, the anode-side dilution system 216 may not include the automatic valve 274.

The three-way valve 277 is changeable between a closed configuration, a partially-open configuration, and an open configuration. The three-way valve 277 changes between configurations in response to instructions from the controller 180. In the closed configuration, the diluent gas 254 is blocked from flowing past the three-way valve 277. In the partially-open configuration, the diluent gas 254 flows past the three-way valve 277 through one of the first diluent-delivery conduit 262 and the second diluent-delivery conduit 264 and the diluent gas 254 is blocked from flowing past the three-way valve 277 through the other of the first diluent-delivery conduit 262 and the second diluent-delivery conduit 264. In the open configuration, the diluent gas 254 flows past the three-way valve 277 through both diluent-delivery conduits 262, 264.

The normally-open valve 277 is changeable between a closed configuration and an open configuration. In the closed configuration, the diluent gas 254 is blocked from flowing past the normally-open valve 277 and into the anode outlet 226. In the open configuration, the diluent gas 254 flows past the normally-open valve 277 and into the separator tank 136 through the oxygen conduit 144. When the normally-open valve 277 is energized (i.e., the electrolysis system 210 is operating), the normally-open valve 277 is in the closed configuration. When electrolysis system 210 is shut down for an emergency stop or other failure modes, the normally-open valve 277 changes to the closed configuration. In other words, the backup conduit 283 delivers diluent gas 254 to the anode side 218 when the electrolysis system 210 is shut down for an emergency stop or other failure modes. The anode-side dilution system 216 may also include a fixed orifice 281 coupled to the backup conduit 283 to maintain a constant flow of the diluent gas 254 without the use of controls.

After an emergency stop, the electrolysis system 210 may take several minutes to depressurize. During this time, oxygen gas 215 is not generated and therefore the HTO ratio of the anode-side gas 219 can spike up due to diffusion on the anode side 218. Other failure modes of the electrolysis system 210 can also cause spikes in the HTO ratio.

Accordingly, the anode-side dilution system 216 is operable between a closed-monitor state, an open-dilution state, and a shutdown state. The closed-monitor state and the open dilution state are described with reference to FIGS. 2-3B above. In the shutdown state, the backup conduit 283 supplies diluent gas 254 to the anode side 218 during an emergency stop or failure mode of the electrolysis system 210 to minimize an increase in the HTO ratio of the anode-side gas 219.

In such embodiments, the fixed orifice 281 may be sized to maintain a flow rate needed to maintain or lower the HTO ratio of the anode-side gas 219 during an emergency stop or failure mode. Furthermore, the diluent gas tank 260 may be sized to hold and provide sufficient flow of the diluent gas 254 to maintain or lower the HTO ratio of the anode-side gas 219 during an emergency stop or failure mode.

While the electrolysis system 210 is energized or upon reenergizing the electrolysis system 210 after an emergency stop or failure mode, the electrolysis system 210 operates similarly to the electrolysis system 110 as shown and described with reference to FIGS. 2-3B. As described above, the arrangement of the diluent-delivery conduits 262, 264 and their respective valves 274, 277 may be as described with reference to FIG. 4 or as described with reference to FIGS. 2-3B.

FIG. 5 shows an alternative embodiment of an electrolysis system 310 of the present disclosure. The electrolysis system 310 is substantially similar to the electrolysis systems 110, 210 shown in FIGS. 2-4 and described herein. Accordingly, similar reference numbers in the 300 series indicate features that are common between the electrolysis system 310 and the electrolysis systems 110. 210. The description of the FIGS. 2-4 is incorporated by reference to apply to FIG. 5, except in instances where there is conflict with the specific description of FIG. 5.

The electrolysis system 310 includes an anode-side dilution system 316. The anode-side dilution system 316 includes a diluent gas tank 360, a first diluent-delivery conduit 362 fluidically coupled between an outlet 372 of the diluent gas tank 360 and the oxygen conduit 344, a second diluent-delivery conduit 364 fluidically coupled between the first diluent-delivery conduit 362 and the third segment 342C of the water conduit 342, and an oxygen circulation system 389 fluidically coupled between an outlet 352 of the oxygen separator tank 336 and an inlet 370 of the diluent gas tank 360. In other embodiments, the anode-side distribution system 316 may have only the first diluent-delivery conduit 362 or another arrangement of diluent-delivery conduits described in other embodiments of the present disclosure.

The anode-side dilution system 316 also includes an automatic valve 374 coupled to the first diluent-delivery conduit 362 and a three-way valve 377 coupled between the first diluent-delivery conduit 362 and the second diluent-delivery conduit 364. The valves 374, 377 may communicate with the control system 176 as described with reference to the embodiment shown in FIGS. 2-4. In some embodiments, the anode-side dilution system 316 may not include the automatic valve 374. The three-way valve 377 is as described with reference to the three-way valve 277 of FIG. 4.

The oxygen circulation system 389 utilizes the oxygen gas 315 of the anode-side gas 319 and/or the combined gas 327 to provide the diluent 354. Utilizing the oxygen gas 315 already generated by the electrolysis system 310 means that the diluent 354 is inherently contaminant free. As described in further detail below, any crossover hydrogen 313C present in the anode-side gas 319 and/or the combined gas 327 is recombined back into water 317 to eventually be drained out of the diluent gas tank 360.

The oxygen circulation system 389 includes an oxygen-circulation conduit 383, a compressor 391, and a catalyst bed 387. The oxygen-circulation conduit 383 directs the anode-side gas 319 and/or the combined gas 327 from the oxygen separator tank 336 to the diluent gas tank 360. The compressor 391 compresses the anode-side gas 319 and/or the combined gas 327 to the predetermined pressure. The catalyst bed 387 recombines the crossover hydrogen 313C with the oxygen gas 315 to form water 317. The catalyst bed 387 may be a GRC.

The oxygen-circulation conduit 383 includes a first segment 383A, a second segment 383B, and a third segment 383C. The first segment 383A fluidically couples the outlet 352 to the compressor 391 to direct the anode-side gas 319 and/or the combined gas 327 therethrough. The second segment 383B fluidically couples the compressor 391 to the catalyst bed 387 to direct the compressed anode-side gas 319 and/or the combined gas 327 therethrough. The third segment 383C fluidically couples the catalyst bed 387 to the diluent gas tank 360 to direct the diluent gas 354 (i.e., the oxygen gas 315) and the water 317 therethrough. The diluent gas tank 360 is formed to include a drain 393 to drain the water 317 out of the tank 360. The drain 393 may include a valve 395 to selectively drain the water 317 out of the tank 360.

Otherwise, the electrolysis system 310 operates similarly to the electrolysis system 110 as shown and described with reference to FIGS. 2-3B and/or the electrolysis system 210 as shown and described with reference to FIG. 4. The anode-side dilution system 316 is operable between a closed-monitor state, an open-dilution state, and/or a shutdown state. The closed-monitor state and the open dilution state are described above with reference to FIGS. 2-3B above. The shutdown state is described above with reference to FIG. 4. As described above, the arrangement of the diluent-delivery conduits 362, 364 and their respective valves 374, 377 may be as described with reference to FIGS. 4 and 5 or as described with reference to FIGS. 2-3B (having only valves 174).

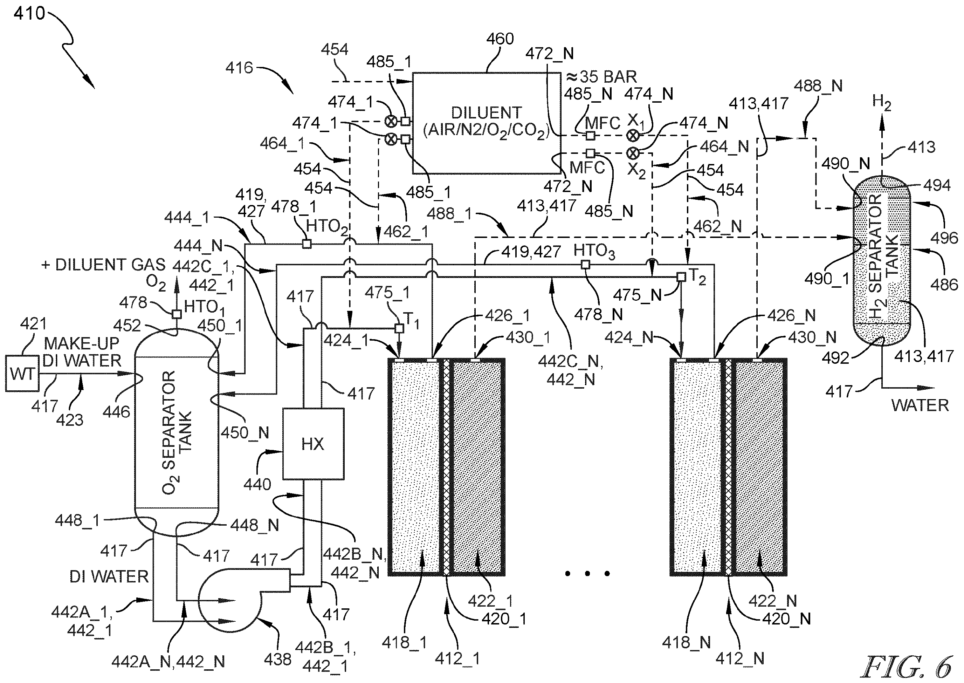

FIG. 6 shows an alternative embodiment of an electrolysis system 410 of the present disclosure. The electrolysis system 410 may include several electrolyzer stacks 412-1, 412-N, as shown in FIG. 6. The several electrolyzer stacks 412-1, 412-N may only be one or two electrolyzer stacks 412-1, 412-N, or may include any number of stacks represented by N, where N is no more than 10 stacks. The electrolysis system 410 is substantially similar to the electrolysis systems 110, 210, 310 shown in FIGS. 2-5 and described herein. Likewise, the electrolyzer stacks 412-1, 412-N are substantially similar to the electrolyzer stacks 112, 212, 312. Accordingly, similar reference numbers in the 400 series indicate features that are common between the electrolysis system 410 and electrolyzer stacks 412-1, 412-N and the electrolysis systems 110, 210, 310 and electrolyzer stacks 112, 212, 312. The description of FIGS. 2-5 is incorporated by reference to apply with FIG. 6, except in instances where there is conflict with the specific description of FIG. 6.

The anode-side dilution system 416 includes first diluent-delivery conduits 462-1, 462-N fluidically coupled between respective outlets 472-1, 472-N of the diluent storage tank 460 and respective oxygen conduits 444-1, 444-N to selectively direct diluent 454 to the respective anode side 418-1, 418-N. The anode-side dilution system 416 also includes second diluent-delivery conduits 464-1, 464-N fluidically coupled between respective outlets 472-1, 472-N of the diluent storage tank 460 and respective water conduits 442-1, 442-N to selectively direct diluent 454 to the respective anode side 418-1, 418-N. In other embodiments, the anode-side distribution system 416 may have only the first diluent-delivery conduits 462-1, 462-N or another arrangement of diluent-delivery conduits described in other embodiments of the present disclosure.

The anode-side dilution system 416 also includes a primary HTO sensor 478 coupled at, near, and/or downstream the oxygen outlet 452 of the oxygen separator tank 436 and configured to measure the HTO ratio of the anode-side gas 419 and/or the combined gas 427 from all of the electrolyzer stacks 412-1, 412-N. The anode-side dilution system 416 further includes secondary HTO sensors 478-1, 478-N coupled to the respective oxygen conduits 444-1, 444-N and configured to measure the HTO ratio of the anode-side gas 419 and/or the combined gas 427 from the respective electrolyzer stacks 412-1, 412-N.

The anode-side dilution system 416 includes the control system 176 as described above with reference to FIGS. 2-3B. The controller 180 is configured to compare the HTO ratios measured by the primary HTO sensor 478 and the secondary HTO sensors 478-1, 478-N to the predetermined threshold.

Accordingly, the anode-side dilution system 416 is operable between a closed-monitor state, a partial open-dilution state and an open-dilution state. In the closed-monitor state, the valves 474-1, 474-N are in the closed configuration and the HTO sensors 478, 478-1, 478-N continuously measure the HTO ratio of the anode-side gas 419 at the respective sensor locations. Meanwhile, the electrolyzer stack 412 operates as described above. Each HTO sensor 478, 478-1, 478-N measures the concentration of hydrogen in the anode-side gas 419 (i.e., the HTO ratio) at the respective sensor locations and the controller 180 compares the measured HTO ratio of the anode-side gas 419 to the predetermined threshold. If the measured HTO ratio of the anode-side gas 419 is less than the predetermined threshold, then the anode-side dilution system 416 remains in the closed-monitor state.

When the controller 180 determines that the measured HTO ratio of the anode-side gas 419 is at or greater than the predetermined threshold at one of the secondary HTO sensors 478-1, 478-N, the anode-side dilution system 416 changes to the partial open-dilution state. In the partial open-dilution state, at least one of the valves 474-1, 474-N associated with the respective secondary HTO sensor 478-1, 478-N is changed to the open configuration so that the diluent air 454 is directed into the respective anode side 418 to mix with the respective anode-side gas 419 to form the combined gas 427. The combined gas 427 then exits the respective outlet 426-1, 426-N and the respective secondary HTO sensor 478-1, 478-N continuously measures the HTO ratio of the combined gas 427 from the respective anode side 418. Meanwhile, the other valves 474-1, 474-N not associated with the respective secondary HTO sensor 478-1, 478-N remain in the closed configuration while the other HTO sensors 478-1, 478-N continuously measure the anode-side gas 419 from the unaffected anode-sides 418. In other words, in the event that one or more, but less than all, electrolyzer stacks 412-1, 412-N causes a high HTO ratio with those stacks 412-1, 412-N but not with the whole system 410, then the other unaffected stacks 412-1, 412-N continue to operate normally.

If the measured HTO ratio at the affected secondary HTO sensor(s) 478-1, 478-N is at or greater than the predetermined threshold, then the anode-side dilution system 416 remains in the partial open-dilution state. If the measured HTO ratio at the affected secondary HTO sensor(s) 478-1, 478-N and the primary HTO sensor 478 is less than the predetermined threshold, the anode-side dilution system 416 changes back to the closed-monitor state. If the measured HTO ratio at the primary HTO sensor 478 is at or greater than the predetermined threshold, then the anode-side dilution system 416 changes to the open-dilution state.

When the controller 180 determines that the measured HTO ratio at the primary HTO sensor 478 is at or greater than the predetermined threshold, the anode-side dilution system 416 changes to the open-dilution state. In the open-dilution state, all the valves 474-1, 474-N associated with each of the electrolyzer stacks 412-1, 412-N is changed to the open configuration so that the diluent air 454 is directed into all of the anode sides 418-1, 418-N to mix with the anode-side gas 419 to form the combined gas 427. The combined gas 427 then exits the outlets 426-1, 426-N and the primary HTO sensor 478 continuously measures the HTO ratio of the combined gas 427. If the measured HTO ratio at the primary HTO sensor 478 is at or greater than the predetermined threshold, then the anode-side dilution system 416 remains in the open-dilution state. If the measured HTO ratio at the primary HTO sensor 478 is less than the predetermined ratio but one or more, but not all, of the secondary HTO sensor(s) 478-1, 478-N is at or above the predetermined ratio, then the anode-side dilution system is changed to the partial open-dilution state. If the measured HTO ratio at the affected secondary HTO sensor(s) 478-1, 478-N and the primary HTO sensor 478 is less than the predetermined threshold, the anode-side dilution system 416 changes back to the closed-monitor state.

The present disclosure is further directed to a method for reducing and/or minimizing the HTO ratio of the anode-side gas 119, 219, 319, 419 and/or the combined gas 127, 227, 327, 427. This method includes providing and/or implementing the electrolysis system 110, 210, 310, 410, as described above. The method further includes measuring the HTO ratio of the anode-side gas 119, 219, 319, 419 with the HTO sensor(s) 178, 278, 378, 478, 478-1, 478-N as described above.

If the measured HTO ratio of the anode-side gas 119, 219, 319, 419 is below a predetermined threshold, then the anode-side dilution system 116, 216, 316, 416 is in a closed-monitor state as described above. If the measured HTO ratio of the anode-side gas 119, 219, 319, 419 is at or above the predetermined threshold, then the anode-side dilution system 116, 216, 316, 416 changes to an open-dilution state (and/or a partial open dilution-state for the anode-side dilution system 416) as described above.

The method further includes the anode-side dilution system 116, 216, 316, 416 delivering diluent 154, 254, 354, 454 to the electrolyzer stack(s) 112, 212, 312, 412-1, 412-N to mix the diluent 154, 254, 354, 454 with the anode-side gas 119, 219, 319, 419 to provide the combined gas 127, 227, 327, 427 as described above. The method further includes measuring the HTO ratio of the combined gas 127, 227, 327, 427 with the HTO sensor(s) 178, 278, 378, 478, 478-1, 478-N as described above.

If the measured HTO ratio of the combined gas 127, 227, 327, 427 is at or above the predetermined threshold, then the anode-side dilution system 116, 216, 316, 416 remains in the open-dilution state (and/or changes to the open-dilution state and/or remains and/or changes to the partial open dilution-state for the anode-side dilution system 416) as described above. If the measured HTO ratio of the combined gas 127, 227, 327, 427 is below a predetermined threshold, then the anode-side dilution system 116, 216, 316, 416 changes to the closed monitor state (and/or changes to and/or remains in the partial open-dilution state for the anode-side dilution system 416) as described above.

A person having ordinary skill in the art would appreciate that the method of reducing and/or minimizing the HTO ratio of the anode-side gas 119, 219, 319, 419 and/or the combined gas 127, 227, 327, 427 may also include use or operation of other components of the electrolysis systems 110, 210, 310, 410 as described above.

As described above, another implementation of the control system 176 may be the control system 900 shown in FIG. 7. The control system 900 includes a computing device 902 in communication over a network 916 with other components of the control system 900, including but not limited to, a controller 930, one or more power sources 920 in the electrolysis systems 110, 210, 310, 410 and other components 940 of the electrolysis system 110, 210, 310, 410 that determine function and performance. The control system 176 described above may be the control system 900. Likewise, the controller 180 may be the controller 930.

The computing device 902 may be embodied as any type of computation or computer device capable of performing the functions described herein, including, but not limited to, a server (e.g., stand-alone, rack-mounted, blade, etc.), a network appliance (e.g., physical or virtual), a high-performance computing device, a web appliance, a distributed computing system, a computer, a processor-based system, a multiprocessor system, a smartphone, a tablet computer, a laptop computer, a notebook computer, and a mobile computing device.

The illustrative computing device 902 of FIG. 7 may include one or more of an input/output (I/O) subsystem 906, a memory 908, a processor 910, a data storage device 912, a communication subsystem 914, and a display 918 that may be connected to each other, in communication with each other, and/or configured to be connected and/or in communication with each other through wired, wireless and/or power line connections and associated protocols (e.g., Ethernet, InfiniBand^{®}, Bluetooth^{®}, Wi-Fi^{®}, WiMAX, 3G, 4G LTE, 5G, etc.).

The computing device 902 may also include additional and/or alternative components, such as those commonly found in a computer (e.g., various input/output devices). In other embodiments, one or more of the illustrative computing device 902 components may be incorporated in, or otherwise form a portion of, another component. For example, the memory 908, or portions thereof, may be incorporated in the processor 910.

The processor 910 may be embodied as any type of computational processing tool or equipment capable of performing the functions described herein. For example, the processor 910 may be embodied as a single or multi-core processor(s), digital signal processor, microcontroller, or other processor or processing/controlling circuit. The memory 908 may be embodied as any type of volatile or non-volatile memory or data storage capable of performing the functions described herein.

In operation, the memory 908 may store various data and software used during operation of the computing device 902 such as operating systems, applications, programs, libraries, and drivers. The memory 908 is communicatively coupled to the processor 910 via the I/O subsystem 906, which may be embodied as circuitry and/or components to facilitate input/output operations with the processor 910, the memory 908, and other components of the computing device 902.

For example, the I/O subsystem 906 may be embodied as, or otherwise include, memory controller hubs, input/output control hubs, sensor hubs, host controllers, firmware devices, communication links (i.e., point-to-point links, bus links, wires, cables, light guides, printed circuit board traces, etc.) and/or other components and subsystems to facilitate the input/output operations.

In one embodiment, the memory 908 may be directly coupled to the processor 910, for example via an integrated memory controller hub. Additionally, in some embodiments, the I/O subsystem 906 may form a portion of a system-on-a-chip (SoC) and be incorporated, along with the processor 910, the memory 908, and/or other components of the computing device 902, on a single integrated circuit chip (not shown).

The data storage device 912 may be embodied as any type of device or devices configured for short-term or long-term storage of data such as, for example, memory devices and circuits, memory cards, hard disk drives, solid-state drives, or other data storage devices. The computing device 902 also includes the communication subsystem 914, which may be embodied as any communication circuit, device, or collection thereof, capable of enabling communications between the computing device 902 and other remote devices over the computer network 916.

The components of the communication subsystem 914 may be configured to use any one or more communication technologies (e.g., wired, wireless and/or power line communications) and associated protocols (e.g., Ethernet, InfiniBand^{®}, Bluetooth^{®}, Wi-Fi^{®}, WiMAX, 3G, 4G LTE, 5G, etc.) to effect such communication among and between system components and devices. The controller 930, the power sources 920, the computing device 902, and additional features or components 940 of stationary and/or immovable power system, such as industrial applications and power generation plants, may be connected, communicate with each other, and/or configured to be connected or in communication with each over the network 916 using one or more communication technologies (e.g., wired, wireless and/or power line communications) and associated protocols (e.g., Ethernet, InfiniBand^{®}, Bluetooth^{®}, Wi-Fi^{®}, WiMAX, 3G, 4G LTE, 5G, etc.).

The computing device 902 may also include any number of additional input/output devices, interface devices, hardware accelerators, and/or other peripheral devices. The computing device 902 of the control system 900 of the electrolysis systems 110, 210, 310, 410 may be configured into separate subsystems for managing data and coordinating communications throughout the electrolysis systems 110, 210, 310, 410.

The display 918 of the computing device 902 may be embodied as any type of display capable of displaying digital and/or electronic information, such as a liquid crystal display (LCD), a light emitting diode (LED), a plasma display, a cathode ray tube (CRT), or other type of display device. In some embodiments, the display 918 may be coupled to or otherwise include a touch screen or other input device.

In one embodiment, the controller 930 is in the same computing device 902 as the processor 910. In other embodiments, the controller 930 may include a memory 932, a processor 934, and a communication system 936, as previously described. The memory 184 described above may be the memory 932. Likewise, the processor 182 described above may be the processor 934.

The anode-side dilution system 116, 216, 316, 416 may minimize turn down over the life of the electrolyzer stack 112, 212, 312, 412 without any HTO concerns, may extend the operating life of the electrolyzer stack 112, 212, 312, 412, and/or may provide safe operation of the electrolysis system 110, 210, 310, 410. Furthermore, the anode-side dilution system 116, 216, 316, 416 may minimize or eliminate the need to shut down the electrolysis system 110, 210, 310, 410 for HTO reasons, may counter degradation in the GRC 81AC over time, and may shut down the electrolysis system 110, 210, 310, 410 when diluent gas 154, 254, 354, 454 runs out or when the maximum diluent flow rate is still insufficient to keep HTO under the predetermined threshold.

The features illustrated or described in connection with one exemplary embodiment may be combined with any other feature or element of any other embodiment described herein. Such modifications and variations are intended to be included within the scope of the present disclosure. Further, a person skilled in the art will recognize that terms commonly known to those skilled in the art may be used interchangeably herein.

The above embodiments are described in sufficient detail to enable those skilled in the art to practice what is claimed and it is to be understood that logical, mechanical, and electrical changes may be made without departing from the spirit and scope of the claims. The detailed description is, therefore, not to be taken in a limiting sense.

As used herein, an element or step recited in the singular and proceeded with the word "a" or "an" should be understood as not excluding plural of said elements or steps, unless such exclusion is explicitly stated. Furthermore, references to "one embodiment" of the presently described subject matter are not intended to be interpreted as excluding the existence of additional embodiments that also incorporate the recited features. Specified numerical ranges of units, measurements, and/or values comprise, consist essentially or, or consist of all the numerical values, units, measurements, and/or ranges including or within those ranges and/or endpoints, whether those numerical values, units, measurements, and/or ranges are explicitly specified in the present disclosure or not.

Unless defined otherwise, technical and scientific terms used herein have the same meaning as is commonly understood by one of ordinary skill in the art to which this disclosure belongs. The terms "first," "second," "third" and the like, as used herein do not denote any order or importance, but rather are used to distinguish one element from another. The term "or" is meant to be inclusive and mean either or all of the listed items. In addition, the terms "connected" and "coupled" are not restricted to physical or mechanical connections or couplings, and can include electrical connections or couplings, whether direct or indirect.

Moreover, unless explicitly stated to the contrary, embodiments "comprising," "including," or "having" an element or a plurality of elements having a particular property may include additional such elements not having that property. The term "comprising" or "comprises" refers to a composition, compound, formulation, or method that is inclusive and does not exclude additional elements, components, and/or method steps. The term "comprising" also refers to a composition, compound, formulation, or method embodiment of the present disclosure that is inclusive and does not exclude additional elements, components, or method steps.

The phrase "consisting of" or "consists of" refers to a compound, composition, formulation, or method that excludes the presence of any additional elements, components, or method steps. The term "consisting of" also refers to a compound, composition, formulation, or method of the present disclosure that excludes the presence of any additional elements, components, or method steps.

The phrase "consisting essentially of" or "consists essentially of" refers to a composition, compound, formulation, or method that is inclusive of additional elements, components, or method steps that do not materially affect the characteristic(s) of the composition, compound, formulation, or method. The phrase "consisting essentially of' also refers to a composition, compound, formulation, or method of the present disclosure that is inclusive of additional elements, components, or method steps that do not materially affect the characteristic(s) of the composition, compound, formulation, or method steps.

Approximating language, as used herein throughout the specification and claims, may be applied to modify any quantitative representation that could permissibly vary without resulting in a change in the basic function to which it is related. Accordingly, a value modified by a term or terms, such as "about," and "substantially" is not to be limited to the precise value specified. In some instances, the approximating language may correspond to the precision of an instrument for measuring the value. Here and throughout the specification and claims, range limitations may be combined and/or interchanged. Such ranges are identified and include all the sub-ranges contained therein unless context or language indicates otherwise.

As used herein, the terms "may" and "may be" indicate a possibility of an occurrence within a set of circumstances; a possession of a specified property, characteristic or function; and/or qualify another verb by expressing one or more of an ability, capability, or possibility associated with the qualified verb. Accordingly, usage of "may" and "may be" indicates that a modified term is apparently appropriate, capable, or suitable for an indicated capacity, function, or usage, while taking into account that in some circumstances, the modified term may sometimes not be appropriate, capable, or suitable.

It is to be understood that the above description is intended to be illustrative, and not restrictive. For example, the above-described embodiments (and/or aspects thereof) may be used individually, together, or in combination with each other. In addition, many modifications may be made to adapt a particular situation or material to the teachings of the subject matter set forth herein without departing from its scope. While the dimensions and types of materials described herein are intended to define the parameters of the disclosed subject matter, they are by no means limiting and are exemplary embodiments. Many other embodiments will be apparent to those of skill in the art upon reviewing the above description. The scope of the subject matter described herein should, therefore, be determined with reference to the appended claims, along with the full scope of equivalents to which such claims are entitled.

This written description uses examples to disclose several embodiments of the subject matter set forth herein, including the best mode, and also to enable a person of ordinary skill in the art to practice the embodiments of disclosed subject matter, including making and using the devices or systems and performing the methods. The patentable scope of the subject matter described herein is defined by the claims, and may include other examples that occur to those of ordinary skill in the art. Such other examples are intended to be within the scope of the claims if they have structural elements that do not differ from the literal language of the claims, or if they include equivalent structural elements with insubstantial differences from the literal languages of the claims.

While only certain features of the invention have been illustrated and described herein, many modifications and changes will occur to those skilled in the art. It is, therefore, to be understood that the appended claims are intended to cover all such modifications and changes as fall within the true spirit of the invention.

## Claims

1. An electrolysis system comprising:
an electrolyzer stack having an anode side configured to provide an anode-side gas having a hydrogen-to-oxygen (HTO) ratio,
an oxygen separator tank fluidically coupled to an outlet of the anode side with an oxygen conduit, and
an anode-side dilution system that is configured to be transitioned between a closed-monitor state and an open-dilution state, the anode-side dilution system includes a diluent gas tank storing a diluent gas and fluidically coupled to the outlet of the anode side with a diluent-delivery conduit between the diluent gas tank and the oxygen conduit, a HTO sensor configured to measure the HTO ratio of the anode-side gas downstream of the oxygen separator tank, and a valve coupled to the diluent-delivery conduit to selectively change the anode-side dilution system between the closed-monitor state and the open-dilution state.

2. The electrolysis system of claim 1, wherein the valve is in a closed configuration when the anode-side dilution system is in the closed-monitor state.

3. The electrolysis system of claim 1 or 2, wherein the valve is in an open configuration when the anode-side dilution system is in the open-dilution state to direct the diluent gas to the anode side to mix and/or blend with the anode-side gas to provide a combined gas having a HTO ratio.

4. The electrolysis system of claim 1, wherein the valve changes from a closed configuration to an open configuration to change the anode-side dilution system from the closed-monitor state to the open-dilution state to direct the diluent gas to the anode side to mix and/or blend with the anode-side gas to provide a combined gas having a HTO ratio.

5. The electrolysis system of claim 4, wherein the anode-side dilution system further includes a controller having a processor and a memory storing instructions to, when executed by the processor, change the valve from the closed configuration to the open configuration and/or keep the valve in the open configuration when the HTO ratio measured by the HTO sensor is at or above a predetermined ratio.

6. The electrolysis system of claim 4, wherein the anode-side dilution system further includes a controller having a processor and a memory storing instructions to, when executed by the processor, keep the valve in the closed configuration and/or change the valve from the open configuration to the closed configuration when the HTO ratio measured by the HTO sensor is below a predetermined ratio.

7. The electrolysis system of any preceding claim, wherein the diluent gas comprises ambient air, nitrogen gas, oxygen gas, and/or carbon dioxide gas.

8. A method for reducing a hydrogen-to-oxygen (HTO) ratio of a gas provided by an electrolyzer stack, the method comprising:
operating an electrolyzer stack, wherein the electrolyzer stack has an anode side configured to provide an anode-side gas having a hydrogen-to-oxygen (HTO) ratio,
measuring the HTO ratio of the anode-side gas with a HTO sensor located downstream of an outlet of the anode side,
if the HTO ratio of the anode-side gas measured by the HTO sensor is below a predetermined threshold, operating an anode-side dilution system coupled to the electrolyzer stack in a closed-monitor state, and
if the HTO ratio of the anode-side gas measured by the HTO sensor is at or above the predetermined threshold, operating the anode-side dilution system in an open-dilution state.

9. The method of claim 8, wherein operating the anode-side dilution system in the open dilution state includes directing a diluent gas to the anode side to mix and/or blend with the anode-side gas.

10. The method of claim 9, wherein operating the anode-side dilution system further includes measuring the HTO ratio of a combined gas of the diluent gas and the anode-side gas with the HTO sensor.

11. The method of claim 9 or 10, wherein directing the diluent gas to the anode side includes directing the diluent gas through the oxygen separator tank.

12. An electrolysis system comprising:
at least two electrolyzer stacks, each of the at least two electrolyzer stacks having an anode side configured to provide an anode-side gas having a hydrogen-to-oxygen (HTO) ratio,
at least two electrolyzer stacks, each of the at least two electrolyzer stacks having an anode side configured to provide an anode-side gas having a hydrogen-to-oxygen (HTO) ratio,
an oxygen separator tank fluidically coupled to an outlet of each of the anode sides with a respective oxygen conduit, and
an anode-side dilution system that is configured to be transitioned between a closed-monitor state and an open-dilution state, the anode-side dilution system includes a diluent gas tank storing a diluent gas and fluidically coupled to the outlet of each anode side with a respective diluent-delivery conduit between the diluent gas tank and the respective oxygen conduit, a primary HTO sensor configured to measure the HTO ratio of the anode-side gas from the at least two electrolyzer stacks downstream of the oxygen separator tank, and a respective valve coupled to each of the diluent-delivery conduits to selectively change the anode-side dilution system between the closed-monitor state and the open-dilution state.

13. The electrolysis system of claim 12, wherein the respective valve is in an open configuration when the anode-side dilution system is in the open-dilution state to direct the diluent gas to an outlet of each anode side to mix and/or blend with the anode-side gas in each anode side to provide a combined gas from the at least two electrolyzer stacks having a HTO ratio.

14. The electrolysis system of claim 12, wherein the anode-side dilution system further includes a controller having a processor and a memory storing instructions to, when executed by the processor, change the respective valve from a closed configuration to an open configuration when the HTO ratio measured by the primary HTO sensor is at or above a predetermined ratio.

15. The electrolysis system of claim 14, wherein the anode-side dilution system further includes a first secondary HTO sensor coupled to a respective oxygen conduit to measure the HTO ratio of the anode-side gas from a respective electrolyzer stack of the at least two electrolyzer stacks and a second secondary HTO sensor coupled to another respective oxygen conduit to measure the HTO ratio of the anode-side gas from another respective electrolyzer stack of the at least two electrolyzer stacks.
